# EUROPEAN PATENT APPLICATION

(11) **EP 1 424 787 A1**
(43) Date of publication of application: **02.06.2004**
(21) Application number: 03014431.5
(22) Date of filing: 30.06.2003
(51) Int. Cl.: H04B 3/54

(54) **Power line communication apparatus**

(30) Priority: 29.11.2002 JP 2002347868
(71) Applicant: MITSUBISHI DENKI KABUSHIKI KAISHA, Tokyo 100-8310 (JP)
(72) Inventor: Hangai, Nobukatsu, Chiyoda-ku, Tokyo 100-8310 (JP)
(74) Representative: HOFFMANN - EITLE

(57) **Abstract**

A power line communication apparatus is capable of displaying transmission rates between itself and a plurality of other power line communication apparatuses connected with a power line. Each of the power line communication apparatuses, between which data is sent and received by using the power line as a carrier path, includes a reference generation part for generating a transmission rate measurement signal and sending it to a modulation part, a transmission rate detection part for obtaining a transmission rate from a transmission rate measurement signal sent from another power line communication apparatus, and a display part for displaying the transmission rate thus obtained.

## Description

### BACKGROUND OF THE INVENTION

### 1. Field of the Invention

The present invention relates to a power line communication apparatus for sending and receiving data by using a power line as a carrier path.

### 2. Description of the Related Art

There has been known a signal attenuation checker for a power line used to send and receive data, which includes a transmitter for continuously sending a test signal of the same frequency as a carrier frequency used in a system onto the power line, and a receiver connected to the power line for receiving, amplifying and A/D converting the test signal on the power line, the receiver being provided with a display circuit for displaying the attenuation level of the test signal (for instance, see a first patent document: Japanese patent application laid-open No. Sho 61-50428).

In addition, a power line communication apparatus has been known which includes an AD converter for converting a modulation signal received through a power line into a digital signal, a control processing part having a function of measuring the transmission characteristic of the power line by using an output digital signal of the AD converter and of sending the result of the measurement, and controlling the processing of sending and receiving data through a modem connected to the power line, a display part for displaying the transmission characteristic of the result of the measurement processing of the control processing part, and an operation part by which an operator can input a transmission characteristic measurement command or the like (for instance, see a second patent document: Japanese patent application laid-open No. Hei 2-82821).

The power line signal checker and the power line communication apparatus as referred to above display the attenuation level of a signal by means of a plurality of LEDs, and also display the measurements of reception level data by numerical values. However, the attenuation level of a signal on the power line is displayed only when a desired point-to-point attenuation level thereof is measured by using the power line signal checker. In addition, the power line communication apparatus measures the reception level of a signal and displays the result of the measurement only when a measurement command is input thereto. However, the transmission characteristic of the power line is greatly influenced by load variations due to the connection of electrical appliances to the power line, and hence it is impossible to determine the time required for communication when such communication is performed through the power line. Furthermore, the transmission rate of communication through the power line can not be determined directly from the attenuation level or the reception level of a signal. As a result, it is impossible to determine the time required for communication of a signal or data through the power line.

### SUMMARY OF THE INVENTION

Accordingly, the object of the present invention is to provide a power line communication apparatus which is capable of displaying transmission rates between the communication apparatus itself and a plurality of other power line communication apparatuses connected with a power line.

Bearing the above object in mind, the present invention resides in a power line communication apparatus for sending and receiving data by using a power line as a carrier path. The apparatus includes a transmission rate detection part for detecting a transmission rate from a transmission rate measurement signal sent from another power line communication apparatus connected with the power line, and a display part for displaying the transmission rate detected by the transmission rate detection part. According to this arrangement, an operator is able to visually confirm the transmission rate, so that data can be sent at a desired transmission rate.

The above and other objects, features and advantages of the present invention will become more readily apparent to those skilled in the art from the following detailed description of preferred embodiments of the present invention taken in conjunction with the accompanying drawings.

### BRIEF DESCRIPTION OF THE DRAWINGS

Fig. 1 is a constructional view of a power line communication system according to a first embodiment of the present invention.
Fig. 2 is a schematic view of a front panel shown in Fig. 1.
Fig. 3 is a flow chart showing the operation of the power line communication system of Fig. 1.
Fig. 4 is a flow chart showing the operation of a power line communication system according to a second embodiment of the present invention.
Fig. 5 is a schematic view of a front panel of a power line communication system according to a third embodiment of the present invention.
Fig. 6 is a flow chart showing the operation of the front panel of Fig. 5.
Fig. 7 is a constructional view of a power line communication system according to a fourth embodiment of the present invention.
Fig. 8 is a constructional view of a power line communication system according to a fifth embodiment of the present invention.
Fig. 9 is a perspective view showing the state where an excitation part and a detection part is fixedly connected with a power line shown in Fig. 8.
Fig. 10 is a schematic view of a front panel shown in Fig. 8.

### DESCRIPTION OF THE PREFERRED EMBODIMENTS

Now, preferred embodiments of the present invention will be described below in detail while referring to the accompanying drawings.

### Embodiment 1.

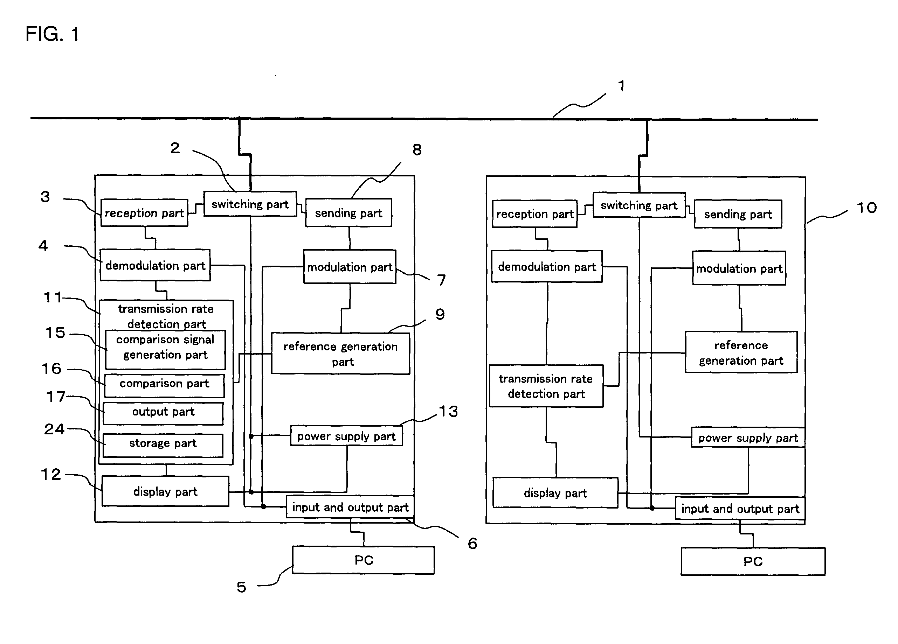

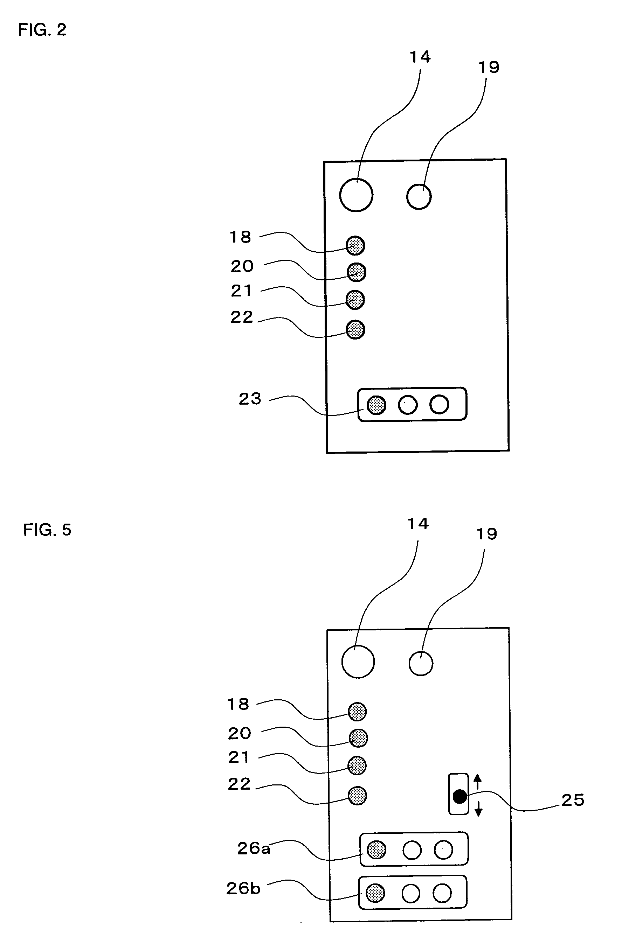

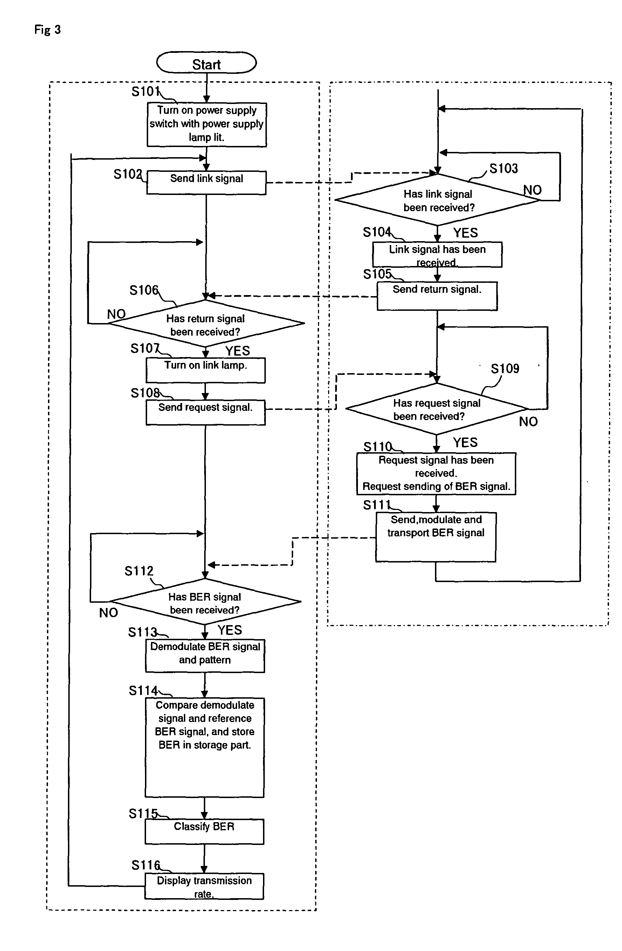

Fig. 1 is a constructional view of a power line communication system which is constructed in accordance with a first embodiment of the present invention. Fig. 2 is a schematic view of a front panel shown in Fig. 1. Fig. 3 is a flow chart that shows the operation of the power line communication system of Fig. 1. A specific power line communication apparatus of concern is connected with an outlet connected to a power line 1, with which a plurality of other power line communication apparatuses each of the same configuration as that of the specific one are also connected so as to communicate with the specific communication apparatus through the power line 1.

Each of the power line communication apparatuses includes a switching part 2 for switching between the sending and receiving of carrier to and from the power line 1, a reception part 3 for receiving the carrier on which data is modulated and superposed, a demodulation part 4 for demodulating data from the carrier received by the reception part 3, an input and output part 6 for providing and receiving data to and from a terminal such as a personal computer 5 (hereinafter abbreviated as a PC), a modulation part 7 for modulating the data input thereto from the PC 5 on the carrier on the power line 1, a sending part 8 for sending the carrier, on which the modulated data is superposed, to the power line 1, a reference generation part 9 for generating a transmission rate measurement signal and sending it to the modulation part 7, a transmission rate detection part 11 for obtaining a transmission rate from a transmission rate measurement signal sent from another power line communication apparatus 10, and a display part 12 for displaying the transmission rate thus obtained.

The specific power line communication apparatus includes a power supply part 13 to which electric power is supplied from an outlet of the power line 1, and the supply of power to the power supply part 13 is controlled by opening and closing a power supply switch 14.

Quadrature amplitude modulation (hereinafter abbreviated as QAM) schemes are adopted as data modulation and demodulation methods, and either one of 4, 16 and 32 QAM schemes is selected according to the transmission rate.

In the first embodiment, bit error rate (hereinafter abbreviated as BER) measurement tests, which conform to ITU-T recommendations, are carried out. The reference generation part 9 generates a transmission rate measurement signal comprising an iterative or cyclic pattern of about 8 - 24 bits such as, for instance, a pattern of 2⁶-1, 2⁹-1, 2¹¹-1.

In addition, the transmission rate detection part 11 includes a comparison signal acquisition part 15 for reading the transmission rate measurement signal pattern accompanying the transmission rate measurement signal received from another power line communication apparatus 10, and acquiring a comparison signal by requesting a transmission rate measurement signal to the reference generation part 9, and a comparison part 16 for comparing the pattern received from the other power line communication apparatus 10 with the transmission rate measurement signal received from the reference generation part 9 thereby to obtain a BER, and an output part 17 for outputting the BER thus obtained to the display part 12.

As shown in Fig. 2, the front panel of each power line communication apparatus is provided with a power supply switch 14, a reset button 18, a power supply lamp 19, a link establishment lamp 20, a cable connection lamp 21, a data transmission (i.e., sending and receiving) lamp 22, and three transmission rate lamps 23 for displaying three equally divided groups (or classifications) of the value of the BER.

Next, the operation of the power line communication system of this embodiment will be explained according to the flow chart of Fig. 3. The operation of data transmission (sending and receiving) by using a terminal such as the PC 5 will be described to an extent related to the transmission rate, while omitting explanations other than this. Hereinbelow, reference will be made to an operation of verifying the rate of transmission performed between a specific power line communication apparatus of concern (hereinafter called apparatus A) and another power line communication apparatus (hereinafter called apparatus B). An indication of the rate of downward transmission from the apparatus B to the apparatus A will first be explained. In general, when the same frequency band is used for upward transmission and downward transmission, the transmission rates for upward transmission and downward transmission become the same value. In addition, the transmission rates when different frequency bands are used for upward and downward transmissions become different between the upward and downward transmissions.

In step S101, when the power supply switch 14 of the apparatus A is switched on, the power supply of the apparatus A is turned on and the power supply lamp 19 is lit. In step S102, a link signal indicating that the apparatus A is enabled to receive transmission from the sending part 8 is sent to the power line 1. In step S103, it is determined whether the link signal has been received by the apparatus B 10. If it is determined that the link signal has been received by the apparatus B, the control flow advances to step S104, whereas if determined that the link signal has not been received, the processing in step S103 is repeated. In step S104, the apparatus A that has sent the link signal is stored in a storage part 24 of the apparatus B if the link signal has been received by the apparatus B. In step S105, a return signal to the effect that the link signal has been received and stored is sent from the apparatus B to the apparatus A. In step S106, it is determined whether the return signal has been received by the apparatus A, and if the return signal has not been received, the processing in step S106 is repeated, whereas if the return signal has been received, the control flow advances to step S107 where the link establishment lamp 20 of the apparatus A is lit. In step S108, a signal requesting the sending of a transmission rate measurement signal for BER measurement is sent from the reference generation part 9 of the apparatus A to the apparatus B 10. In step S109, it is determined whether the apparatus B has received the request signal, and if the request signal has not been received, the processing in step S109 is repeated, whereas if the request signal has been received, the control flow advances to step S110 where the reception part 3 of the apparatus B 10 verifies the receipt of the request signal, and makes a request for the generation of a BER signal to the reference generation part 9 of the apparatus B. In step S111, the reference generation part 9 of the apparatus B generates a BER signal, which is then modulated by the modulation part 7 and sent from the sending part 8 of the apparatus B to the apparatus A. In step S112, it is determined whether the BER signal has been received by the apparatus A, and if not received, the processing in step S112 is repeated, whereas if received, the control flow advances to step S113 where the reception part 3 of the apparatus A receives carrier on which the transmission rate measurement signal sent from the apparatus B 10 is subjected to QAM and superposed, and the demodulation part 4 demodulates the transmission rate measurement signal from the carrier thus received, and the pattern of the transmission rate measurement signal at the same time. In step S114, the transmission rate measurement signal thus demodulated is compared with the transmission rate measurement signal which has been generated by the reference generation part 9 and which has the same pattern as the sent pattern, whereby a BER is obtained and stored in a storage part 24 of the transmission rate detection part 11 of the apparatus A. In step S115, the transmission rate of the thus obtained BER is classified into one of the three groups by the transmission rate detection part 11 having two threshold values. In step S116, the thus classified transmission rate is input to the display part 12 of the apparatus A where a corresponding transmission rate lamp 23 is lit, and then the control flow returns to step S102.

With such a power line communication system, the transmission of data is carried out after an operator has visually confirmed the transmission rate displayed on the front panel, so that it is possible for the operator to grasp the time required for data communication.

In addition, if a plurality of power line communication apparatuses 10 are provided in a house or premise, transmission can be carried out at different transmission rates as required, thus making it possible to perform smooth communications as a whole.

Moreover, it is possible to monitor the communication condition of the power line 1 with which the power line communication apparatus of concern is connected, by taking the BER stored in the storage part 12 into the personal computer 5.

### Embodiment 2.

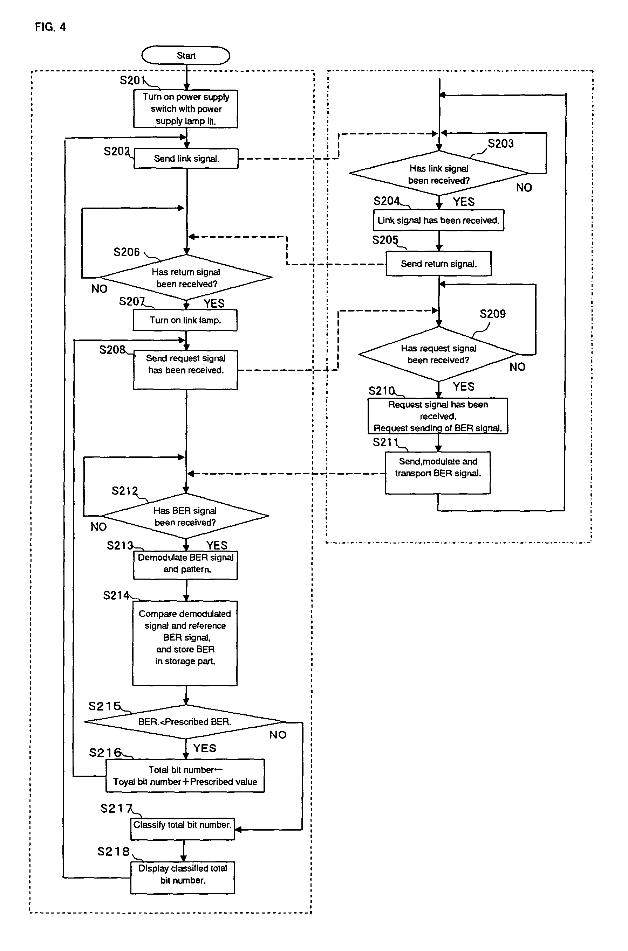

Fig. 4 is a flow chart that shows the operation of a power line communication system according to a second embodiment of the present invention. The power line communication system of this embodiment is of the same configuration as that of the first embodiment shown in Fig. 1, but differs therefrom in that the transmission rate is classified into a plurality of groups by obtaining a total number of bits allocated when data is modulated with the BER being fixed to a prescribed value.

Now, the operation of the power line communication system of the second embodiment will be explained below while referring to Fig. 4.

Processing of obtaining a BER from step S201 to step S214 is the same as that of the first embodiment. In step S215, the BER obtained is compared with a prescribed reference BER, and when the BER is greater than the prescribed reference BER, the control flow advances to step S217, whereas when the BER in less than the prescribed reference BER, the control flow advances to step S216. In step S216, a predetermined value (i.e., a predetermined number of bits) is added to the total bit number used for modulation, and the total bit number thus added is sent to the modulation part 7, and the control flow returns to step S208. In step S217, the total bit number obtained in step S214 is classified into one of three groups by means of the transmission rate detection part 11 having two threshold values. In step S218, the total bit number thus classified is input to the display part 12 where a corresponding transmission rate lamp 23 is lit, and the control flow returns to step S202.

Such a power line communication apparatus according to this embodiment displays the total bit number used for signal modulation as a transmission rate while keeping the BER at a constant value, whereby the modulation rate can be increased.

### Embodiment 3.

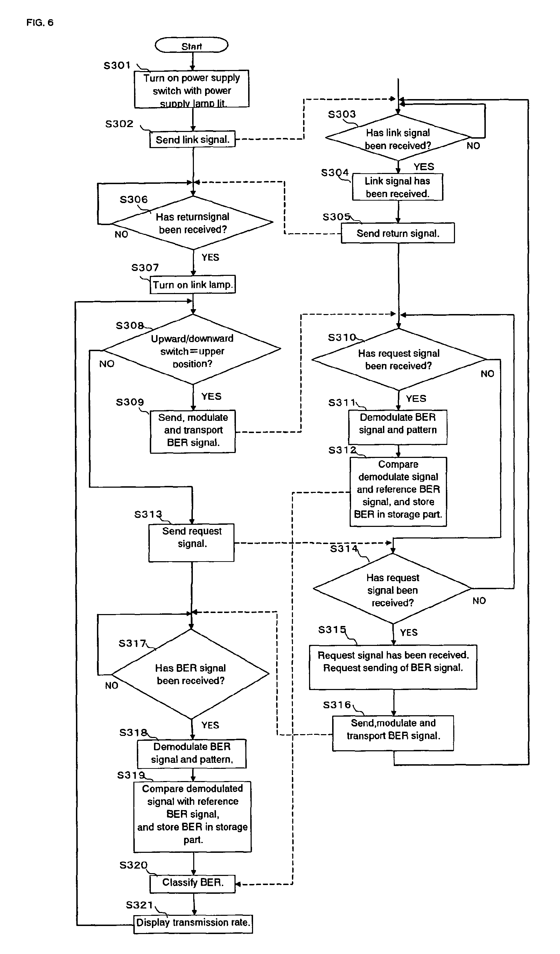

Fig. 5 is a schematic view of a front panel of a power line communication system according to a third embodiment of the present invention. Fig. 6 is a flow chart that shows the operation of the front panel in Fig. 5. This third embodiment differs from the above-mentioned first embodiment in that the frequency band of carrier used for transmission from a specific power line communication apparatus of concern (hereinafter referred to as apparatus A) to another power line communication apparatus (hereinafter referred to as apparatus B) (hereinafter referred to as upward transmission) is different from that used for transmission from the apparatus B to the apparatus A (hereinafter referred to as downward transmission).

The front panel of this embodiment is provided, in addition to the same components as those designated at 14 and 18 through 22, with an upward/downward transmission changing switch 25, an upward transmission rate lamp 26a for indicating an upward transmission rate, and a downward transmission rate lamp 26b for indicating a downward transmission rate.

In step S301, when the power supply switch 14 of the apparatus A is switched on, the power supply of the apparatus A is turned on and the power supply lamp 19 is lit. In step S302, a link signal indicating that the apparatus A is enabled to receive transmission from the sending part 8 is sent to the power line 1. In step S303, it is determined whether the link signal has been received by the apparatus B 10. If it is determined that the link signal has been received by the apparatus B, the control flow advances to step S304, whereas if determined that the link signal has not been received, the processing in step S303 is repeated. In step S304, the apparatus A that has sent the link signal is stored in the storage part 24 of the apparatus B if the link signal has been received by the apparatus B. In step S305, a return signal to the effect that the link signal has been received and stored is sent from the apparatus B to the apparatus A. In step S306, it is determined whether the return signal has been received by the apparatus A, and if the return signal has not been received, the processing in step S306 is repeated, whereas if the return signal has been received, the control flow advances to step S307 where the link establishment lamp 20 of the apparatus A is lit. In step S308, it is determined whether the upward/downward transmission changing switch 25 is in an upper position (i.e., indicative of upward transmission) or in a lower position (i.e., indicative of downward transmission). If the switch 25 is in the upper position, the control flow advances to step S309, whereas if the switch 25 is in the lower position, the control flow advances to step S313. In step S309, the reference generation part 9 of the apparatus A generates a BER signal, which is then modulated by the modulation part 7 and sent from the sending part 8 of the apparatus A to the apparatus B. In step S310, it is determined whether the apparatus B has received the BER signal, and if the BER signal has not been received, the control flow advances to step S314, whereas if it is received, the control flow advances to step S311 where the reception part 3 of the apparatus B receives carrier on which the transmission rate measurement signal sent from the apparatus A 10 is subjected to QAM and superposed, and the demodulation part 4 demodulates the transmission rate measurement signal from the carrier thus received and the pattern of the transmission rate measurement signal at the same time. In step S312, the transmission rate measurement signal thus demodulated is compared with the transmission rate measurement signal which has been generated by the reference generation part 9 and which has the same pattern as the sent pattern, whereby a BER is obtained and stored in the storage part 24 of the transmission rate detection part 11 of the apparatus B. Also, the classified value (i.e., group number) of the BER is sent to the apparatus A, and the control flow returns to step S303. In step S313, a signal requesting the sending of a transmission rate measurement signal for BER measurement is sent from the reference generation part 9 of the apparatus A to the apparatus B 10. In step S314, it is determined whether the apparatus B has received the request signal, and if the request signal has not been received by the apparatus B, the control flow returns to step S310, whereas if the request signal has been received, the control flow advances to step S315 where the reception part 3 of the apparatus B 10 verifies the receipt of the request signal, and makes a request for the generation of a BER signal to the reference generation part 9 of the apparatus B. In step S316, the reference generation part 9 of the apparatus B generates a BER signal, which is then modulated by the modulation part 7 and sent from the sending part 8 of the apparatus B to the apparatus A. In step S317, it is determined whether the BER signal has been received by the apparatus A, and if not received, the processing in step S317 is repeated, whereas if received, the control flow advances to step S318 where the reception part 3 of the apparatus A receives carrier on which the transmission rate measurement signal sent from the apparatus B 10 is subjected to QAM and superposed, and the demodulation part 4 demodulates the transmission rate measurement signal from the carrier thus received and the pattern of the transmission rate measurement signal at the same time. In step S319, the transmission rate measurement signal thus demodulated is compared with the transmission rate measurement signal which has been generated by the reference generation part 9 and which has the same pattern as the sent pattern, whereby a BER is obtained and stored in a storage part 24 of the transmission rate detection part 11 of the apparatus A. In step S320, the upward transmission rate of the BER sent from step S312 and the downward transmission rate of the BER obtained in step S319 are each classified into one of the three groups by the transmission rate detection part 11 having two threshold values. In step S321, the thus classified transmission rates are input to the display part 12 of the apparatus A where corresponding transmission rate lamps 26a, 26b are lit, respectively, and then the control flow returns to step S308.

Thus, an operator can visually confirm the different upward and downward transmission rates, so that it becomes possible to estimate the time required to exchange data between two power line communication apparatuses.

### Embodiment 4.

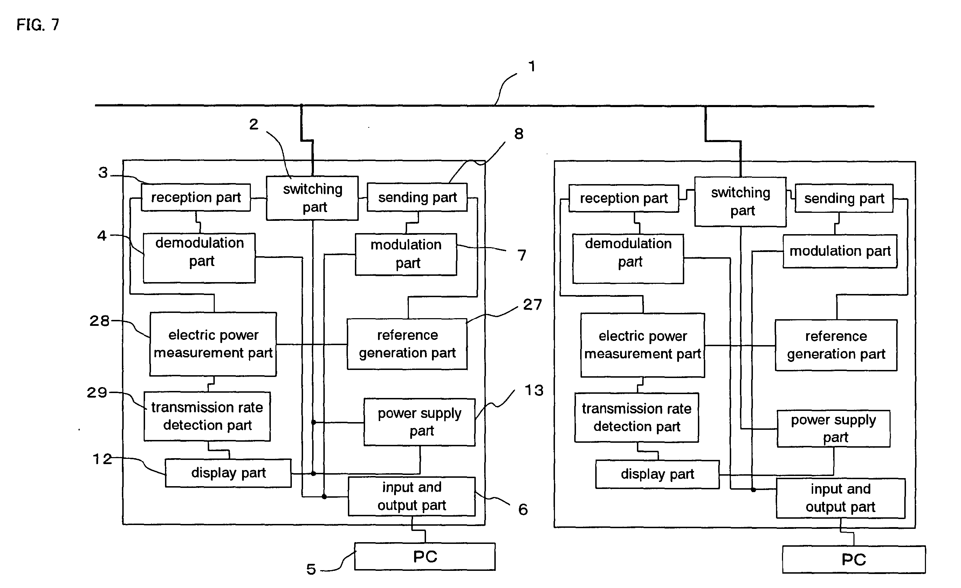

Fig. 7 is a constructional view of a power line communication system according to a fourth embodiment of the present invention. Although in the above-described first embodiment, the transmission rate can be classified by measuring a BER, this third embodiment differs from the first embodiment in that the electric power attenuation rate of carrier is measured so that the transmission rate is classified and displayed in accordance with a relation between the electric power attenuation rate thus measured and a prescribed transmission rate obtained beforehand.

Each of power line communication apparatuses includes a switching part 2 for switching between the sending and receiving of carrier to and from a power line 1, a reception part 3 for receiving from the power line 1 the carrier on which data is modulated and superposed, a demodulation part 4 for demodulating data from the carrier received by the reception part 3, a modulation part 7 for modulating the data input thereto from a terminal such as a PC 5 onto the carrier on the power line 1, a sending part 8 for sending the carrier, on which the modulated data is superposed, to the power line 1, a reference generation part 27 for delaying the carrier to convert it into carrier of a different phase, attenuating the amplitude of the thus converted carrier so as to scale or normalize it, and sending it to sending part 8, an electric power measurement part 28 for filtering the carrier which is sent from another power line communication apparatus and which has a phase different from that of the carrier from the power line 1, thereby to measure its electric power, a transmission rate detection part 29 for comparing the measured electric power of the carrier from another power line communication apparatus with the scaled or normalized electric power of the carrier to provide an attenuation rate, as well as for calculating a transmission rate by using the prescribed relation obtained in advance between the transmission rate and the attenuation rate, and a display part 12 for displaying the transmission rate thus obtained.

The prescribed relation between the transmission rate and the attenuation rate or amount, in which the transmission rate decreases as the attenuation amount increases, is an inverse proportion.

Thus, by measuring the amount of attenuation in the power line 1, it is possible to obtain the transmission rate from the prescribed relation of an inverse proportion between the transmission rate and the attenuation amount determined in advance in an easy and simple manner. In addition, the transmission rate is classified into a plurality of groups and displayed on the front panel, so that a desired transmission rate can be easily selected.

Although in this fourth embodiment, the measurement of the attenuation amount has been made only for one of the upward and downward transmissions, in cases where the frequency bands for the upward and downward transmissions are different from each other, attenuation amounts can be measured for the upward and downward transmissions, respectively. In this case, an attenuation amount and a transmission rate measured for the upward or downward transmission are sent via the power line 1 to other power line communication apparatuses as data, so that they can be displayed at the respective apparatuses, and stored in the respective storage parts thereof. Embodiment 5.

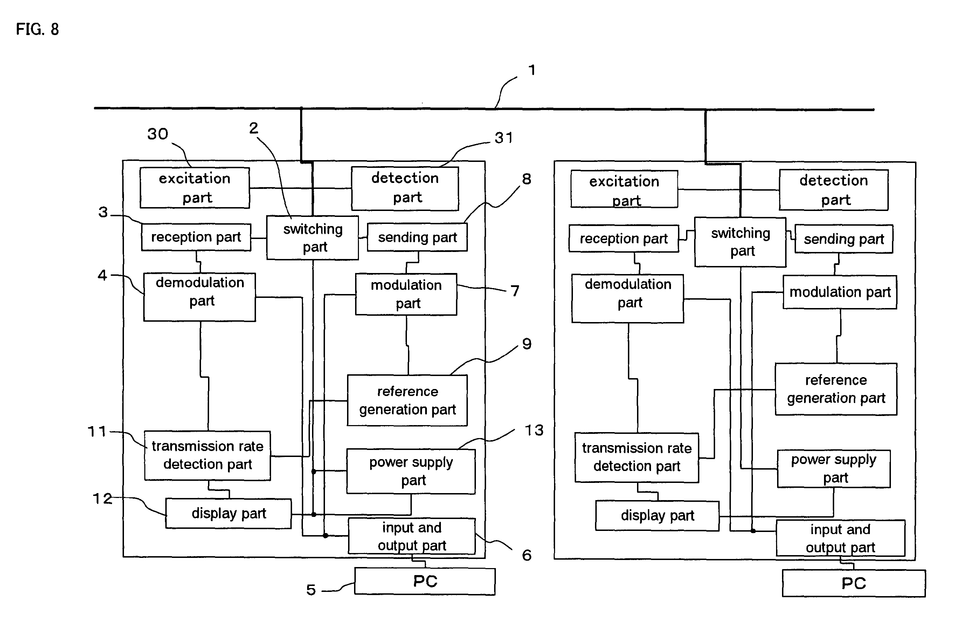

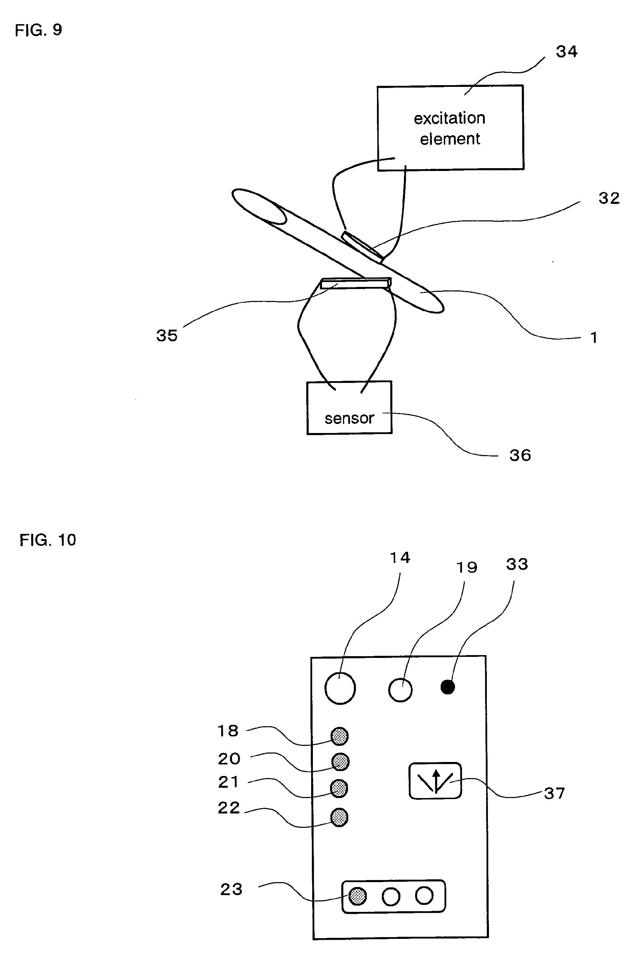

Fig. 8 is a constructional view of a power line communication system according to a fifth embodiment of the present invention. Fig. 9 is a perspective view in which a vibration or excitation part 30 and a detection part 31 are fixedly mounted to a power line 1. Fig. 10 is a schematic view of a front panel shown in Fig. 8. As shown in Fig. 8, in this embodiment, each of power line communication apparatuses is provided with the vibration or excitation part 30 for applying mechanical vibration to an electric wire or conductor that connects between the power line 1 and the switching part 2 of the power line communication apparatus of Fig. 1, and a detection part 31 for detecting the mechanical vibration of the electric wire connecting between the power line 1 and the switching part 2.

As shown in Figs. 9 and 10, the vibration part 30 includes a piezoelectric buzzer 32 fixedly arranged in contact with the electric wire, an excitation switch 33 arranged on the front panel of each power line communication apparatus, and an excitation element 34 for supplying a signal of a commercial frequency, which is obtained by dividing the voltage of the power line 1 by means of unillustrated resistors, to the piezoelectric buzzer 32. When the excitation switch 33 is turned on, the excitation element 34 is connected with the commercial power, so that the piezoelectric buzzer 32 is caused to vibrate by the signal of the commercial frequency, the vibration of the buzzer 32 being transmitted to the power line 1.

The detection part 31 includes a piezoelectric element 35 for detecting the vibration of the buzzer 32, and a sensor 36 for sensing the presence or absence of the transmission of vibration by comparing a voltage excited in the piezoelectric element 35 with a prescribed threshold value.

The display part 12 can detect the presence or absence of excitation by driving a meter 37 on the front panel.

In this manner, it is possible to detect whether the power line 1 and power line communication apparatuses of concern are connected with each other through power lines 1 of the same phase, so that if it is detected that they are connected with each other through power lines 1 of opposite phases, the connections of the power line communication apparatuses with outlets of the power lines 1 can be exchanged with each other so that the power lines 1 connecting between the power line communication apparatuses have the same phase.

As will be clear from the foregoing description, according to the present invention, there is provided a power line communication apparatus for sending and receiving data by using a power line as a carrier path, the apparatus comprising a transmission rate detection part for detecting a transmission rate from a transmission rate measurement signal sent from another power line communication apparatus connected with the power line, and a display part for displaying the transmission rate detected by the transmission rate detection part. With this arrangement, an operator can visually confirm the transmission rate, thus making it possible for data to be sent at a desired transmission rate.

While the invention has been described in terms of preferred embodiments, those skilled in the art will recognize that the invention can be practiced with modifications within the spirit and scope of the appended claims.

## Claims

1. A power line communication apparatus for sending and receiving data by using a power line (1) as a carrier path, said apparatus comprising:
a transmission rate detection part (11, 29) for detecting a transmission rate from a transmission rate measurement signal sent from another power line communication apparatus (10) connected with said power line (1); and
a display part (12) for displaying said transmission rate detected by said transmission rate detection part.

2. The power line communication apparatus according to claim 1, wherein said transmission rate detection part (11, 29) detects said transmission rate by measuring a bit error rate.

3. The power line communication apparatus according to claim 1 or 2, wherein said transmission rate detection part (11, 29) detects said transmission rate by measuring a total number of bits allocated for modulation while keeping constant a bit error rate detected by said transmission rate detection part (11, 29).

4. The power line communication apparatus according to claim 1, further comprising an electric power measurement part (28) for measuring the electric power of carrier transporting said data,
wherein said electric power measurement part (28) measures the electric power of normalized carrier sent from another power line communication apparatus (10), and
said transmission rate detection part (11, 29) obtains an amount of attenuation of electric power from said measured electric power and said normalized electric power of carrier, and detects, from said amount of attenuation of electric power, a transmission rate that is in a proportional relation with said amount of attenuation of electric power.

5. The power line communication apparatus according to any one of claims 1 to 4, further comprising:
a sending part (8) for sending data to said power line (1); and
a reception part (3) for receiving data sent through said power line (1);
wherein data of said transmission rate detected is sent to another power line communication apparatus (10).

6. The power line communication apparatus according to any one of claims 1 to 5, further comprising:
an excitation part (30) for applying mechanical vibration to that one of two or more power lines (1) which is to be detected; and
a detection part (31) for detecting mechanical vibrations of said power lines (1);
wherein a transmission rate on a specific power line (1) is detected by making a determination as to whether said specific power line (1) to be detected is the same power line (1) excited by said excitation part (30).

7. The power line communication apparatus according to any one of claims 1 to 6, wherein
said transmission rate detection part (11, 29) is provided on each of a receiving-side power line communication apparatus and a sending-side power line communication apparatus; and
said transmission rate detection part (11, 29) detects transmission rates in receiving and sending said data, respectively.
